# EUROPÄISCHE PATENTSCHRIFT

(11) **EP 1 883 091 B1**
(45) Veröffentlichungstag und Bekanntmachung des Hinweises auf die Patenterteilung: **29.12.2010**
(21) Anmeldenummer: 06015458.0
(22) Anmeldetag: 25.07.2006
(51) Int. Cl.: H01H 39/00

(54) **Pyromechanische Trennvorrichtung**
Pyrotechnic circuit breaker
Disjoncteur pyrotechnique

(43) Veröffentlichungstag der Anmeldung: 30.01.2008
(73) Patentinhaber: Autoliv Development AB, 447 83 Vårgårda (SE)
(72) Erfinder: Deutschmann, Claus-Werner, 90579 Langenzenn (DE); Lang, Bernhard, 90537 Feucht (DE); Albrecht, Uwe, 90478 Nürnberg (DE)
(74) Vertreter: Berkenbrink, Kai-Oliver

(56) Entgegenhaltungen:
- WO-A-2004/077478
- DE-A1- 10 337 958
- US-A1- 2005 083 164

## Beschreibung

Die Erfindung betrifft eine pyromechanische Trennvorrichtung mit einem Gehäuse und einem in dem Gehäuse angeordneten Trennelement, welches durch Beaufschlagung durch ein pyrotechnisches Zündelement relativ zu dem Gehäuse bewegbar ist, um einen Stromleiter zu durchtrennen.

Eine derartige Trennvorrichtung wird beispielsweise in einem Kraftfahrzeug eingesetzt, um bei einem Unfall ein elektrisches Bordnetz von einer Fahrzeugbatterie zu trennen und dadurch die Brandgefahr durch Kurzschluss zu verringern.

Bei einer bekannten pyromechanischen Trennvorrichtung wird das Trennelement beim Zusammenbau durch seitlich am Trennelement angebrachte federnde Rastnasen in einer definierten Position in in einem Gehäuse vorgesehene Nuten eingerastet. Eine prozesssichere Herstellung und Montage der Einzelteile zu einem zuverlässig funktionierenden Gesamtsystem ist daher aufwändig

Aus der US 2005/0083164 A1 ist eine pyromechanische Trennvorrichtung nach dem Oberbegriff des Anspruchs 1 bekannt.

Der Erfindung liegt die Aufgabe zugrunde, eine pyromechanische Trennvorrichtung zu schaffen, die mit einem geringeren wirtschaftlichen Aufwand herstellbar ist und gleichzeitig eine zuverlässige Funktion gewährleistet.

Die Aufgabe wird durch eine pyromechanische Trennvorrichtung mit den Merkmalen des Anspruchs 1 und insbesondere dadurch gelöst, dass das Trennelement vor Beaufschlagung durch das Zündelement einstückig mit dem Gehäuse ausgebildet ist und an seiner dem Zündelement zugewandten Seite eine Ausnehmung aufweist, in die das Zündelement zumindest teilweise hineinragt, und ein Druckbegrenzungsmittel vorgesehen ist, um einen durch das Zündelement in der Ausnehmung erzeugten Druck zu begrenzen.

Erfindungsgemäß bildet das Trennelement im Ruhezustand, d.h. vor Auslösung der Trennvorrichtung, einen integralen Bestandteil des Gehäuses. Erst durch die Beaufschlagung durch das Zündelement wird das Trennelement von dem Gehäuse gelöst, so dass eine Bewegung des Trennelements relativ zum Gehäuse möglich ist.

Durch die einstückige Ausbildung von Trennelement und Gehäuse ist die Trennvorrichtung einfacher und kostengünstiger herstellbar, weil das Trennelement und das Gehäuse in einem Arbeitsgang ausgebildet werden können, z.B. durch einen Spritzgussprozess. Letztlich ist hierdurch die Montage der Trennvorrichtung vereinfacht, da das Trennelement nicht in einem separaten Arbeitsschritt in dem Gehäuse angeordnet zu werden braucht, sondern nach Herstellung der Gehäuse/Trennelement-Kombination nur noch das Zündelement mit dem Gehäuse verbunden und ggf. der Stromleiter in das Gehäuse eingesetzt zu werden braucht.

Durch die einstückige Ausbildung von Trennelement und Gehäuse ist außerdem sichergestellt, dass das Trennelement stets korrekt in dem Gehäuse positioniert ist und sich somit in einer gewünschten Relativlage zu dem Zündelement und zu dem zu durchtrennenden Stromleiter befindet. Dies gewährleistet eine zuverlässige Funktion der Trennvorrichtung.

Erfindungsgemäß weist das Trennelement an seiner dem Zündelement zugewandten Seite eine Ausnehmung auf, in die das Zündelement zumindest teilweise hineinragt. Dabei sind die äußere Kontur des Zündelements und die innere Kontur der Ausnehmung bevorzugt aneinander angepasst. Die Ausnehmung bildet zum einen eine Druckkammer, in welcher sich bei Auslösung des Zündelements ein Gasdruck aufbauen kann, durch den das Trennelement vom Gehäuse gelöst und in Richtung des zu durchtrennenden Stromleiters beschleunigt wird. Zum anderen trägt das in die Ausnehmung eingreifende Zündelement dazu bei, dass das Trennelement in einer gewünschten Richtung beschleunigt wird.

Erfindungsgemäß ist zudem ein Druckbegrenzungsmittel vorgesehen, um einen durch das Zündelement in der Ausnehmung erzeugten Druck zu begrenzen. Das Druckbegrenzungsmittel trägt zur Einstellung eines für die Innenballistik optimalen Druckverlaufs und somit eines für die Durchtrennung des Stromleiters optimalen Bewegungsverlaufs des Trennelements bei. Das Druckbegrenzungsmittel kann beispielsweise durch wenigstens eine eine die Ausnehmung begrenzende Wand des Trennelements schwächende Fläche oder die Wand durchbrechende Öffnung gebildet sein.

Die erfindungsgemäße Trennvorrichtung ermöglicht eine besonders schnelle Durchtrennung des Stromleiters, wodurch die Ausbildung eines Lichtbogens an der Trennstelle des Stromleiters vermieden und somit letztlich die Gefahr einer Überhitzung oder eines Brandes verringert ist. Vorteilhafte Ausbildungen der Erfindung sind den Unteransprüchen, der Beschreibung und der Zeichnung zu entnehmen.

Gemäß einer Ausführungsform ist das Trennelement durch einen bei Beaufschlagung des Trennelements durch das Zündelement abscherbaren Verbindungssteg mit dem Gehäuse verbunden. Ein derartiger Verbindungssteg sorgt nicht nur für eine sichere Halterung des Trennelements in dem Gehäuse, sondern auch für ein leichtes Lösen des Trennelements von dem Gehäuse bei Zündung des Zündelements.

Der Verbindungssteg kann das Trennelement ringartig umgeben. Ferner kann der Verbindungssteg unterbrechungsfrei ausgebildet sein oder mehrere über den Umfang des Trennelements verteilt angeordnete Stegabschnitte umfassen. Der Verbindungssteg kann mit anderen Worten massiv oder mit Unterbrechungen ausgebildet sein. Entscheidend ist, dass er eine Engstelle bildet, die durch Ausüben einer gewissen Kraft aufgerissen werden kann. Durch eine geeignete geometrische Ausgestaltung des Verbindungsstegs kann das Abreißverhalten so eingestellt werden, dass bei Auslösung des Zündelements ein für die Innenballistik optimaler Innendruck und somit letztlich eine besonders schnelle Durchtrennung des Stromleiters erreicht wird. Sofern das Gehäuse und das Trennelement durch einen Kunststoff-Spritzvorgang hergestellt werden, kann durch eine geeignete geometrische Gestaltung des Verbindungsstegs außerdem ein prozesssicheres Fließverhalten für den Kunststoff erzielt werden.

Gemäß einer weiteren Ausführungsform bilden der Verbindungssteg und das Zündelement bei Beaufschlagung des Trennelements durch das Zündelement zumindest zeitweise und insbesondere bis zur vollständigen Durchtrennung des Stromleiters eine Führung für das Trennelement. Auf diese Weise ist sichergestellt, dass sich das Trennelement nach Zündung des Zündelements entlang einer vorgegebenen Bahn relativ zum Gehäuse bewegt und unter einer zur Durchtrennung des Stromleiters optimalen Position bzw. unter einem zur Durchtrennung des Stromleiters optimalen Winkel auf diesen auftrifft.

Damit der Verbindungssteg nach seinem Abscheren das Trennelement führen kann, ist es vorteilhaft, wenn das Abscheren des Verbindungsstegs trennelementseitig erfolgt, der abgetrennte Verbindungssteg also am Gehäuse stehen bleibt. Der Verbindungssteg kann zu diesem Zweck eine im Übergangsbereich zum Trennelement angeordnete Solltrennstelle aufweisen.

Gemäß einer weiteren Ausführungsform ist eine Verdrehsicherung vorgesehen, um das Trennelement bei Beaufschlagung durch das Zündelement, insbesondere nach Abscheren eines Verbindungsstegs, an einer Verdrehung relativ zu dem Gehäuse zu hindern. Die Verdrehsicherung trägt dazu bei, dass das durch das Zündelement beaufschlagte Trennelement in optimaler Weise auf den zu durchtrennenden Stromleiter auftrifft, wodurch die Zuverlässigkeit der Funktion der Trennvorrichtung noch weiter erhöht ist. Die Verdrehsicherung kann beispielsweise durch ein das Trennelement und das Gehäuse verbindendes Filmscharnier gebildet sein.

Gemäß einer weiteren Ausführungsform ist der Stromleiter in dem Gehäuse angeordnet. Dabei kann ein, insbesondere einstückig mit dem Gehäuse ausgebildetes, Widerlager für den Stromleiter vorgesehen sein, um eine noch wirksamere, insbesondere schnellere, Durchtrennung des Stromleiters durch das Trennelement zu ermöglichen.

Bevorzugt weist das Widerlager eine Aussparung für einen nach der Durchtrennung des Stromleiters durch das Trennelement umgebogenen Abschnitt des Stromleiters auf, die sich in einer vom Trennelement weg weisenden Richtung verjüngt. Durch die Verjüngung der Aussparung bleibt das z.B. aus einem Kunststoffmaterial gebildete Trennelement nach Durchtrennung des Stromleiters als Isolator zwischen den aufgetrennten Leiterabschnitten in der Aussparung stecken. Auf diese Weise ist sichergestellt, dass der Stromfluss durch den Stromleiter dauerhaft unterbrochen ist.

Um die Durchtrennung des Stromleiters zu erleichtern, kann der Stromleiter eine Solltrennstelle aufweisen. Ferner kann der Stromleiter eine, bevorzugt im Bereich eines Randes der Aussparung im Widerlager des Stromleiters angeordnete, Sollbiegestelle aufweisen, die das Umbiegen eines Leiterabschnitts durch das Trennelement in die Aussparung erleichtert.

Gemäß einer weiteren Ausführungsform umfasst der Stromleiter einen im Wesentlichen U-förmig ausgebildeten Abschnitt. Die Schenkel des im Wesentlichen U-förmigen Stromleiterabschnitts können in entsprechend ausgebildeten Taschen des Gehäuses gelagert sein.

Vorteilhafterweise ist der Stromleiter durch Rastmittel in dem Gehäuse gesichert. Die Rastmittel können beispielsweise eine an einem Schenkel eines im Wesentlichen U-förmigen Stromleiterabschnitts angeordnete Rastzunge umfassen, die mit einem z.B. in einer Gehäusetasche für den Schenkel angeordneten Rastvorsprung zusammenwirkt. Die Rastmittel ermöglichen eine Fixierung des Stromleiters in einer für seine Durchtrennung optimalen Lage.

Gemäß einer weiteren Ausführungsform sind das Zündelement und das Gehäuse im Wesentlichen gasdicht und druckfest miteinander verbunden. Dies trägt dazu bei, dass sich bei einer Zündung des Zündelements innerhalb kürzester Zeit ein maximaler Gasdruck in dem Gehäuse aufbaut und eine noch schnellere Durchtrennung des Stromleiters erreicht wird.

Das Zündelement, insbesondere eine Kunststoffummantelung des Zündelements, und das Gehäuse können beispielsweise durch eine Schweißverbindung, z.B. eine Ultraschall-, Reib-, Laser- oder Spritzschweißverbindung, miteinander verbunden sein. Das Verschweißen von Zündelement und Gehäuse ermöglicht nicht nur eine im Wesentlichen gasdichte und druckfeste Verbindung von Zündelement und Gehäuse, sondern vereinfacht auch die Herstellung der Trennvorrichtung.

Weiterer Gegenstand der Erfindung ist außerdem ein Verfahren zur Herstellung einer pyromechanischen Trennvorrichtung, bei dem ein Gehäuse und ein in dem Gehäuse angeordnetes Trennelement zum Durchtrennen eines Stromleiters einstückig miteinander ausgebildet werden, z.B. durch einen Kunststoff-Spritzgussprozess, ein pyrotechnisches Zündelement zum Beaufschlagen des Trennelements, insbesondere im Wesentlichen gasdicht und druckfest, mit dem Gehäuse verbunden wird, z.B. durch einen Schweißprozess, und der zu durchtrennende Stromleiter in dem Gehäuse angeordnet und insbesondere verrastet wird.

Das erfindungsgemäße Verfahren ermöglicht eine besonders kostengünstige Herstellung einer pyromechanischen Trennvorrichtung, welche die voranstehend genannten Vorteile aufweist und welche sich insbesondere durch eine zuverlässige Funktion auszeichnet.

Nachfolgend wird die Erfindung rein beispielhaft anhand vorteilhafter Ausführungsformen unter Bezugnahme auf die beigefügte Zeichnung beschrieben. Es zeigen:
- Fig. 1: eine Längsschnittansicht einer erfindungsgemäßen Trennvorrichtung gemäß einer ersten Ausführungsform;
- Fig. 2: mehrere Abwicklungsprofile für einen Verbindungssteg der Trennvorrichtung von Fig. 1;
- Fig. 3: Längsschnittansichten einer erfindungsgemäßen Trenn- vorrichtung gemäß einer zweiten Ausführungsform (A) im Ruhezustand, (B) bei auf einen Stromleiter auftreffendem Trennelement und (C) mit durchtrenntem Stromleiter;
- Fig. 4: eine perspektivische Explosionsansicht der Trennvorrich- tung von Fig. 3;
- Fig. 5: eine Ansicht des Gehäuses der Trennvorrichtung von Fig. 3 in einem zum Schnitt von Fig. 3 rechtwinkligen Längs- schnitt.

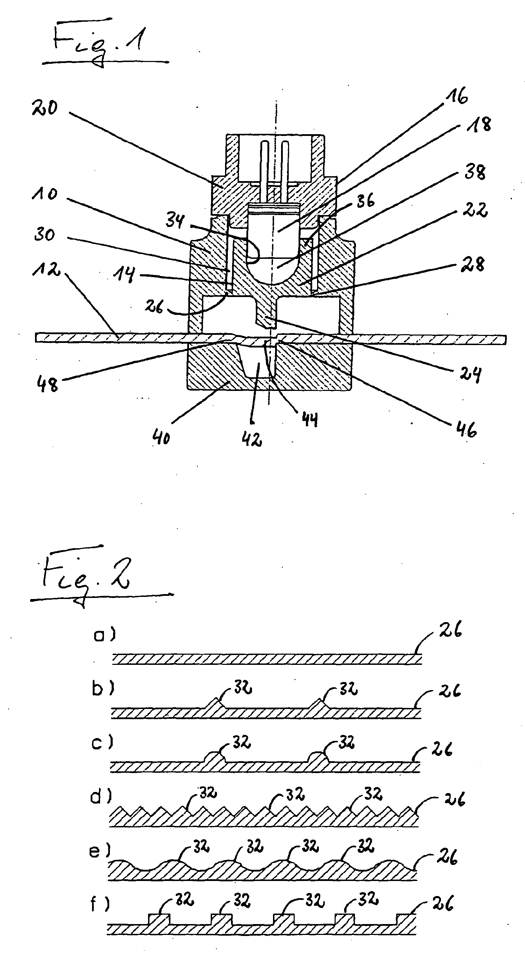

In Fig. 1 ist eine pyromechanische Trennvorrichtung gemäß einer ersten Ausführungsform in ihrem Ruhezustand, d.h. also vor ihrer Auslösung, dargestellt.

Die Trennvorrichtung umfasst ein als Kunststoff-Spritzgussteil ausgebildetes Gehäuse 10, in welchem ein Stromleiter 12 und ein Trennelement 14 zum Durchtrennen des Stromleiters 12 angeordnet sind. Die Trennvorrichtung umfasst ferner ein pyrotechnisches Zündelement 16, welches einen einen Explosivstoff beherbergenden Zündabschnitt 18 aufweist, welcher teilweise von einer Kunststoffummantelung 20 umgeben ist. Das Zündelement 16 ist so an das Gehäuse 10 angesetzt, dass der Zündabschnitt 18 in das Innere des Gehäuses 10 ragt. Die Kunststoffummantelung 20 des Zündelements 16 ist mittels einer Schweißverbindung, z.B. einer Ultraschall-, Reib-, Laser- oder Spritzschweißverbindung, im Wesentlichen gasdicht und druckfest mit dem Gehäuse 10 verbunden.

Das Trennelement 14 ist einstückig mit dem Gehäuse 10 ausgebildet und weist einen Kolbenabschnitt 22 und einen Meißelabschnitt 24 auf. In einem zum Meißelabschnitt 24 weisenden Endbereich des Kolbenabschnitts 22 ist das Trennelement 14 durch einen Verbindungssteg 26 mit dem Gehäuse 10 verbunden. Der Verbindungssteg 26 weist im Bereich seines trennelementseitigen Endes eine Engstelle 28 bzw. Materialschwächung auf, die ein Abscheren des Trennelements 14 von dem Verbindungssteg 26 ermöglicht.

Der Verbindungssteg 26 umläuft den Kolbenabschnitt 22 des Trennelements 14 unterbrechungsfrei nach Art eines Ringes und schließt einen zwischen dem Gehäuse 10 und dem Trennelement 14 ausgebildeten Zwischenraum 30 vollständig ab. Bei einer derartigen durchgehenden Ausbildung des Verbindungsstegs 26 ist der Zwischenraum 30 durch den Verbindungssteg 26 einerseits und durch das mit dem Gehäuse verschweißte Zündelement 16 andererseits im Wesentlichen hermetisch abgeschlossen. Der Zwischenraum 30 ist auf diese Weise vor äußeren Einflüssen, wie z.B. einem Eindringen von Flüssigkeit oder Staub, geschützt, so dass eine einwandfreie Bewegung und Trennfunktion des Kolbenabschnitts 22 dauerhaft gewährleistet ist.

In Fig. 2 sind verschiedene mögliche Profile eines durchgehenden, d.h. nicht unterbrochenen, Verbindungsstegs 26, welcher das voranstehend beschriebene hermetische Abschließen des Zwischenraums 30 ermöglicht, dargestellt, und zwar jeweils im abgewickelten Zustand des Verbindungsstegs 26.

Fig. 2a zeigt einen Verbindungssteg 26 mit einer im Wesentlichen gleich bleibenden Stärke. Fig. 2b zeigt dagegen einen Verbindungssteg 26, welcher zusätzlich durch Rippen 32 verstärkt ist, die zueinander beabstandet sind und jeweils ein dreieckiges Profil aufweisen. Eine abgewandelte Form eines derartigen Verbindungsstegs 26, bei welcher die Rippen 32 eine Art Sägezahnmuster bilden, ist in Fig. 2d gezeigt. Anstelle von dreieckigen Rippen 32 können auch abgerundete Rippen 32 (Fig. 2c und 2e) oder viereckige Rippen 32 (Fig. 2f) vorgesehen sein.

Alternativ zu einer durchgehenden Ausbildung des Verbindungsstegs 26 kann der Verbindungssteg 26 unterbrochen und lediglich punktuell oder abschnittsweise mit dem Trennelement 14 verbunden sein. Auch ein derartiger unterbrochener Verbindungssteg 26 kann in der voranstehend beschriebenen Weise durch Rippen 32 verstärkt sein.

Wie Fig. 1 zeigt, weist der Kolbenabschnitt 22 des Trennelements 14 im Bereich seines dem Meißelabschnitt 24 abgewandten Endes eine zum Zündelement 16 hin offene Ausnehmung 34 auf. Der Zündabschnitt 18 des Zündelements 16 ragt zumindest teilweise in die Ausnehmung 34 hinein. Dabei ist der Kolbenabschnitt 22 so ausgebildet, dass eine die Ausnehmung 34 umgebende Wand 36 an dem Zündabschnitt 18 anliegt. Durch den Kolbenabschnitt 22 und den Zündabschnitt 18 ist ein Druckraum 38 begrenzt.

Wird das Zündelement 16 ausgelöst, so zündet der in dem Zündabschnitt 18 befindliche Explosivstoff, und der Zündabschnitt 18 wird an seiner in die Ausnehmung 34 weisenden Vorderseite aufgesprengt. Durch das durch die Umsetzung des Explosivstoffs freigesetzte Gas baut sich in dem Druckraum 38 ein Gasdruck auf, welcher das Trennelement 14 in Richtung des Stromleiters 12 beaufschlagt.

Sobald der Gasdruck einen gewissen Schwellenwert überschreitet, genauer gesagt, sobald die auf den Kolbenabschnitt 22 wirkende Kraft größer als die Scherkraft an der Engstelle 28 wird, reißt das Trennelement 14 von dem Verbindungssteg 26 ab. Da das Abreißverhalten letztlich von der geometrischen Gestaltung des Verbindungsstegs 26 und insbesondere der Engstelle 28, d.h. also der Scherfläche zwischen Gehäuse 10 und Trennelement 14, abhängt, lässt sich durch eine geeignete geometrische Ausbildung des Verbindungsstegs 26 und insbesondere der Engstelle 28, z.B. durch die Auswahl eines geeigneten Abwicklungsprofils (Fig. 2), ein für die Innenballistik optimaler Gasdruck erreichen. Darüber hinaus kann über die Auswahl eines geeigneten geometrischen Profils der Engstelle 28 ein prozesssicheres Fließ- und Füllverhalten für den verwendeten Werkstoff erzielt werden, falls das Gehäuse 10 mittels eines Spritzprozesses hergestellt wird.

Durch den Gasdruck wird das von dem Gehäuse 10 losgelöste Trennelement 14 in Richtung des Stromleiters 12 bewegt. Um das Auftreffen des Meißelabschnitts 24 auf den Stromleiter 12 unter einer für die Durchtrennung des Stromleiters 12 optimalen Position und einem für die Durchtrennung des Stromleiters 12 optimalen Winkel sicherzustellen, wird das Trennelement 14 während seiner Bewegung in zwei in Bewegungsrichtung zueinander beabstandeten Bereichen geführt. Eine in Bewegungsrichtung gesehen vordere Führung des Trennelements 14 erfolgt durch den Verbindungssteg 26, welcher gewissermaßen eine ringartige Führung bildet, durch die sich der losgelöste Kolbenabschnitt 22 hindurch schiebt. Im Bereich seines in Bewegungsrichtung gesehen hinteren Endes wird das Trennelement 14 zumindest bis zum Auftreffen des Meißelabschnitts 24 auf den Stromleiter 12 durch den in die Ausnehmung 34 des Kolbenabschnitts 22 eingreifenden Zündabschnitt 18 geführt.

Der Stromleiter 12 ist zum Abfangen der durch das Trennelement 14 ausgeübten Trennkraft durch ein Widerlager 40 unterstützt, welches einstückig mit dem Gehäuse 10 ausgebildet ist.

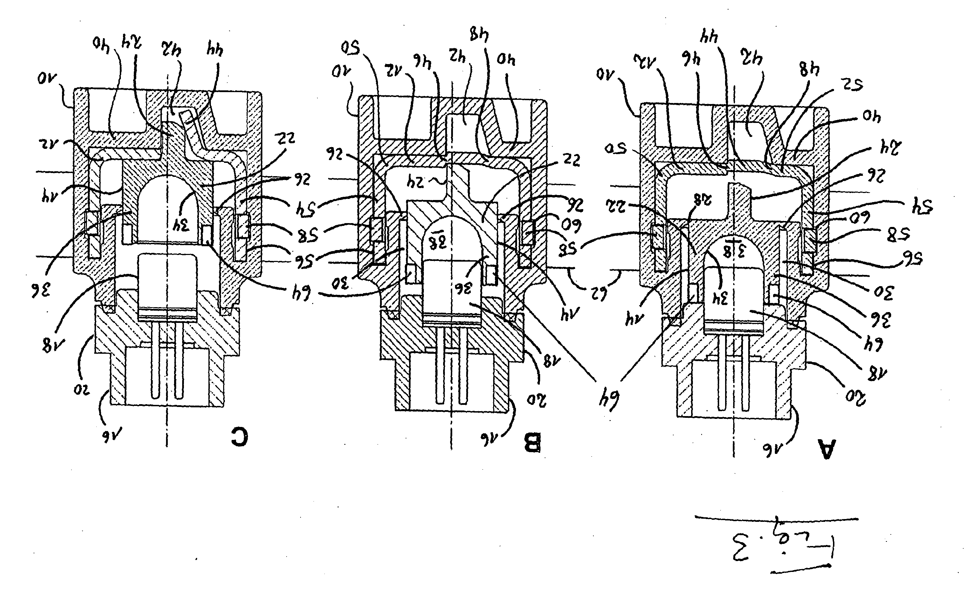

In dem Widerlager ist eine unter dem Stromleiter 12 gelegene Aussparung 42 vorgesehen. Die Aussparung 42 dient zur Aufnahme des Meißelabschnitts 24 sowie eines durch den Meißelabschnitt umgebogenen Abschnitts 44 des Stromleiters 12 nach der Durchtrennung des Stromleiters 12 (vgl. hierzu auch Fig. 3C). Die Aussparung 42 weist einen sich in Bewegungsrichtung des Trennelements 14 verjüngenden Querschnitt derart auf, dass der Meißelabschnitt 24 nach einer Durchtrennung des Stromleiters 12 in der Aussparung 42 stecken bleibt und die voneinander getrennten Stromleiterabschnitte dauerhaft gegeneinander isoliert.

Um das Durchtrennen des Stromleiters 12 zu erleichtern und den Trennvorgang unter definierten Bedingungen durchzuführen, weist der Stromleiter 12 eine im Bereich eines Randes der Aussparung 42 angeordnete Solltrennstelle 46 auf. Zusätzlich ist der Meißelabschnitt 24 an seiner zum Stromleiter 12 weisenden Vorderseite so ausgebildet, dass die durch das Trennelement 14 auf den Stromleiter 12 ausgeübte Kraft auf den Bereich der Solltrennstelle 46 konzentriert wird.

Um das Umbiegen des über der Aussparung 42 gelegenen Stromleiterabschnitts 44 in die Aussparung 42 zu erleichtern, weist der Stromleiter 12 im Bereich eines Randes der Aussparung 42 außerdem eine Sollbiegestelle 48 auf.

In Fig. 3 ist eine pyromechanische Trennvorrichtung gemäß einer zweiten Ausführungsform dargestellt, die in ihrem Aufbau und ihrer Funktion mit der voranstehend beschriebenen ersten Ausführungsform im Wesentlichen übereinstimmt. Nachfolgend werden daher lediglich die Unterschiede zwischen der ersten und dritten Ausführungsform erläutert. Für baugleiche bzw. funktionsgleiche Bauteile werden die bereits angeführten Bezugszeichen beibehalten.

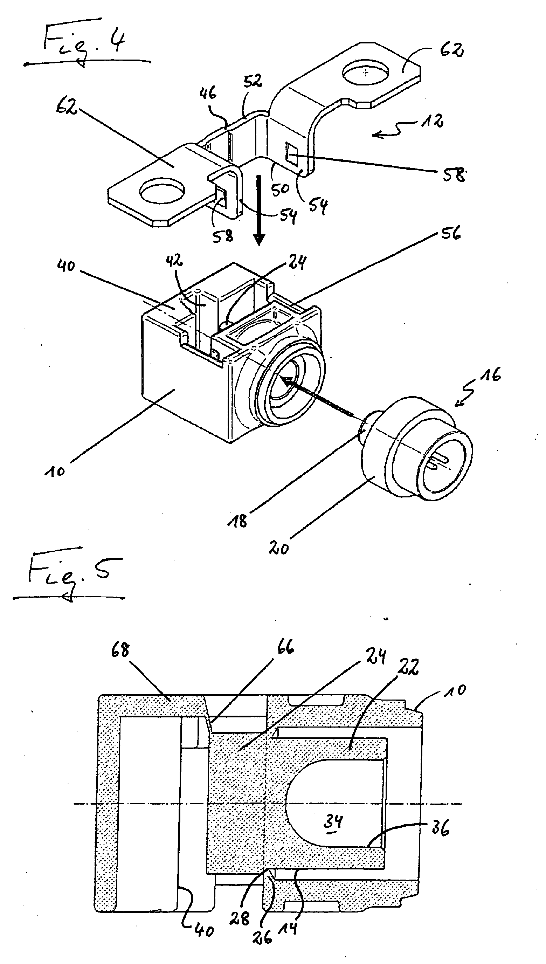

Wie Fig. 3 und 4 zu entnehmen ist, weist der Stromleiter 12 der Trennvorrichtung gemäß zweiter Ausführungsform einen U-förmigen Abschnitt 50 auf. Der U-förmige Abschnitt 50 ist so in dem Gehäuse 10 angeordnet, dass die Basis 52 des U-förmigen Abschnitts 50 auf dem Widerlager 40 aufliegt. In der Basis 52 sind in der bereits beschriebenen Art und Weise eine Solltrennstelle 46 und eine Sollbiegestelle 48 ausgebildet.

Aus der Basis 52 gehen zwei im Wesentlichen rechtwinklig umgebogene Schenkel 54 des U-förmigen Abschnitts 50 hervor, die in Taschen 56 des Gehäuses gelagert sind. Zur Fixierung des Stromleiters 12 in dem Gehäuse 10 ist an jedem Schenkel 54 eine nach außen umgebogene Rastzunge 58 ausgebildet, die einen in der jeweiligen Gehäusetasche 56 entsprechend ausgebildeten Rastvorsprung 60 hintergreift.

Aus einer Längsseite jedes Schenkels 54 geht jeweils ein im Wesentlichen rechtwinklig, flügelartig nach außen umgebogener Anschlussabschnitt 62 hervor.

Im weiteren Unterschied zur ersten Ausführungsform sind im Bereich des dem Zündelement 16 zugewandten Endes des Trennelements 14 mehrere Schlitze 64 in der die Ausnehmung 34 begrenzenden Wand 36 des Kolbenabschnitts 22 ausgebildet. Die Schlitze 64 sind so positioniert, dass sie im Ruhezustand der Trennvorrichtung (Fig. 3A) vollständig durch den an der Wand 36 anliegenden Zündabschnitt 18 abgedeckt sind. Ferner ist die Ausdehnung der Schlitze 64 in Bewegungsrichtung des Trennelements 14 gesehen derart bemessen, dass die Schlitze 64 im Zeitpunkt der Durchtrennung des Stromleiters 12 zumindest teilweise mit dem Zündabschnitt 18 außer Eingriff gelangen, so dass das im Druckraum 38 befindliche Gas durch die Schlitze 64 hindurch in den Zwischenraum 30 entweichen kann.

Die Schlitze 64 wirken somit als Druckbegrenzungsmittel zur Begrenzung des sich in dem Druckraum 38 aufbauenden Gasdrucks. Durch eine entsprechende Ausgestaltung der Schlitze 64 ist es möglich, den Verlauf der durch das Zündelement 16 auf das Trennelement 14 ausgeübten Kraft einzustellen. Durch die Ausgestaltung der Schlitze 64 und/oder die bereits beschriebene Ausgestaltung des Verbindungsstegs 26 lässt sich somit eine für die Durchtrennung des Stromleiters 12 optimale Bewegung des Trennelements 14 erreichen.

Alternativ oder zusätzlich zu den Schlitzen 64 kann die Wand 36 bereichsweise so geschwächt sein, dass sie bei Überschreiten eines vorbestimmten Gasdrucks im Druckraum 38 aufbricht, um das in dem Druckraum 38 befindliche Gas entweichen zu lassen und den Gasdruck dadurch abzubauen.

Wie in Fig. 5 dargestellt ist, weist die Trennvorrichtung gemäß der zweiten Ausführungsform ferner eine Verdrehsicherung für das Trennelement 14 auf, welche eine Verdrehung des von dem Gehäuse 10 gelösten Trennelements 14 verhindert. Die Verdrehsicherung ist durch ein Filmscharnier 66 gebildet, welches einen in Bewegungsrichtung des Trennelements 14 gesehen vorderen Eckbereich des Meißelabschnitts 24 mit einem Wandabschnitt 68 des Gehäuses 10 verbindet. Das Filmscharnier 66 ist einstückig mit dem Gehäuse 10 und dem Trennelement 14 ausgebildet, d.h. es wird gleichzeitig mit dem Gehäuse 10 und dem Trennelement 14 in einem einzigen Arbeitsgang, z.B. einem Spritzgussvorgang, hergestellt.

Das Filmscharnier 66 ist so ausgebildet, dass es bei einer Bewegung des Trennelements 14 zur Durchtrennung des Stromleiters 12 nicht durchgerissen, sondern lediglich in Bewegungsrichtung des Trennelements 14 umgebogen wird. Das Filmscharnier 66 verhindert eine Verdrehung des von dem Verbindungssteg 26 losgelösten Trennelements 14 relativ zum Gehäuse 10 und trägt somit zu einer definierten Bewegung des Trennelements 14 innerhalb des Gehäuses 10 bei.

Zur Montage der Trennvorrichtung gemäß zweiter Ausführungsform wird das Zündelement 16 in der bereits beschriebenen Weise mit dem Gehäuse 10 verschweißt und der Stromleiter 12 wie in Fig. 4 gezeigt so in das Gehäuse 10 eingesetzt, dass die Rastzungen 58 hinter den Rastvorsprüngen 60 einrasten.

### Bezugszeichenliste

- 10: Gehäuse
- 12: Stromleiter
- 14: Trennelement
- 16: Zündelement
- 18: Zündabschnitt
- 20: Kunststoffummantelung
- 22: Kolbenabschnitt
- 24: Meißelabschnitt
- 26: Verbindungssteg
- 28: Engstelle
- 30: Zwischenraum
- 32: Rippe
- 34: Ausnehmung
- 36: Wand
- 38: Druckraum
- 40: Widerlager
- 42: Aussparung
- 44: Abschnitt
- 46: Solltrennstelle
- 48: Sollbiegestelle
- 50: U-förmiger Abschnitt
- 52: Basis
- 54: Schenkel
- 56: Tasche
- 58: Rastzunge
- 60: Rastvorsprung
- 62: Anschlussabschnitt
- 64: Schlitz
- 66: Filmscharnier
- 68: Wandabschnitt

## Patentansprüche

1. Pyromechanische Trennvorrichtung mit einem Gehäuse (10) und einem in dem Gehäuse (10) angeordneten Trennelement (14), welches durch Beaufschlagung durch ein pyrotechnisches Zündelement (16) relativ zu dem Gehäuse (10) bewegbar ist, um einen Stromleiter (12) zu durchtrennen, wobei das Trennelement (14) vor Beaufschlagung durch das Zündelement (16) einstückig mit dem Gehäuse (10) ausgebildet ist,
**dadurch gekennzeichnet, dass**
das Trennelement (14) an seiner dem Zündelement (16) zugewandten Seite eine Ausnehmung (34) aufweist, in die das Zündelement (16) zumindest teilweise hineinragt, und ein Druckbegrenzungsmittel (64) vorgesehen ist, um einen durch das Zündelement (16) in der Ausnehmung (34) erzeugten Druck zu begrenzen.

2. Vorrichtung nach Anspruch 1,
**dadurch gekennzeichnet, dass**
das Trennelement (14) durch einen bei Beaufschlagung des Trennelements (14) durch das Zündelement (16) abscherbaren Verbindungssteg (26) mit dem Gehäuse (10) verbunden ist.

3. Vorrichtung nach Anspruch 1 oder 2,
**dadurch gekennzeichnet, dass**
der Verbindungssteg (26) unterbrechungsfrei ausgebildet ist oder mehrere über den Umfang des Trennelements (14) verteilt angeordnete Stegabschnitte umfasst.

4. Vorrichtung nach Anspruch 2 oder 3,
**dadurch gekennzeichnet, dass**
der Verbindungssteg (26) und das Zündelement (16) bei Beaufschlagung des Trennelements (14) durch das Zündelement (16) zumindest zeitweise und insbesondere bis zur vollständigen Durchtrennung des Stromleiters (12) eine Führung für das Trennelement (14) bilden.

5. Vorrichtung nach zumindest einem der vorherigen Ansprüche,
**dadurch gekennzeichnet, dass**
das Druckbegrenzungsmittel (64) bei Erreichen eines vorbestimmten Druckschwellenwerts in der Ausnehmung (34) und/oder bei Erreichen eines vorbestimmen Verschiebewegs des Trennelements (14) relativ zu dem Gehäuse (10) aktivierbar ist.

6. Vorrichtung nach zumindest einem der vorherigen Ansprüche ,
**dadurch gekennzeichnet, dass**
das Druckbegrenzungsmittel durch wenigstens eine eine die Ausnehmung (34) begrenzende Wand (36) des Trennelements (14) schwächende Fläche oder die Wand durchbrechende Öffnung (64) gebildet ist.

7. Vorrichtung nach zumindest einem der vorstehenden Ansprüche,
**dadurch gekennzeichnet, dass**
eine Verdrehsicherung (66) vorgesehen ist, um das Trennelement (14) bei Beaufschlagung durch das Zündelement (16), insbesondere nach Abscheren eines Verbindungsstegs (26), an einer Verdrehung relativ zu dem Gehäuse (10) zu hindern.

8. Vorrichtung nach Anspruch 7,
**dadurch gekennzeichnet, dass**
die Verdrehsicherung durch ein das Trennelement (14) und das Gehäuse (10) verbindendes Filmscharnier (66) gebildet ist.

9. Vorrichtung nach zumindest einem der vorstehenden Ansprüche,
**dadurch gekennzeichnet, dass**
ein, insbesondere einstückig mit dem Gehäuse (10) ausgebildetes, Widerlager (40) für den Stromleiter (12) vorgesehen ist.

10. Vorrichtung nach Anspruch 9,
**dadurch gekennzeichnet, dass**
das Widerlager (40) eine Aussparung (42) für einen nach der Durchtrennung des Stromleiters (12) durch das Trennelement (14) umgebogen Abschnitt (44) des Stromleiters (12) aufweist, die sich in einer vom Trennelement (14) wegweisenden Richtung verjüngt.

11. Vorrichtung nach zumindest einem der vorstehenden Ansprüche,
**dadurch gekennzeichnet, dass**
der Stromleiter (12) eine Sollbiegestelle (48) und/oder eine Solltrennstelle (46) aufweist.

12. Vorrichtung nach zumindest einem der vorstehenden Ansprüche,
**dadurch gekennzeichnet, dass**
der Stromleiter (12) einen im wesentlichen U-förmig ausgebildeten Abschnitt (50) umfasst.

13. Vorrichtung nach zumindest einem der vorstehenden Ansprüche,
**dadurch gekennzeichnet, dass**
der Stromleiter (12) durch Rastmittel (58, 60) in dem Gehäuse (10) gesichert ist.

14. Vorrichtung nach zumindest einem der vorstehenden Ansprüche,
**dadurch gekennzeichnet, dass**
das Zündelement (16) und das Gehäuse (10) im Wesentlichen gasdicht und druckfest miteinander verbunden sind.

15. Vorrichtung nach zumindest einem der vorstehenden Ansprüche,
**dadurch gekennzeichnet, dass**
das Zündelement (16), insbesondere eine Kunststoffummantelung (20) des Zündelements (16), und das Gehäuse (10) durch eine Schweißverbindung miteinander verbunden sind.

16. Verfahren zur Herstellung einer pyromechanischen Trennvorrichtung nach einem der vorstehenden Ansprüche, bei dem
ein Gehäuse (10) und ein in dem Gehäuse (10) angeordnetes Trennelement (14) zum Durchtrennen eines Stromleiters (12) einstückig miteinander ausgebildet werden, z.B. durch einen Kunststoff-Spritzgussprozess,
ein pyrotechnisches Zündelement (16) zum Beaufschlagen des Trennelements (14) mit dem Gehäuse verbunden wird, z.B. durch einen Schweißprozess, und
der zu durchtrennende Stromleiter in dem Gehäuse angeordnet wird.

## Claims

1. A pyromechanical severing device with a housing (10) and a severing element (14) disposed in the housing (10), said severing element being able to be moved relative to the housing (10) by being acted upon by a pyrotechnic ignition element (16) in order to sever a current conductor (12), wherein the severing element (14) is constituted in one piece with the housing (10) before being acted on by the ignition element (16),
**characterised in that**
the severing element (14) comprises on its side facing the ignition element (16) a recess (34), into which the ignition element (16) projects at least partially, and a pressure limiting means (64) is provided in order to limit a pressure generated by the ignition element (16) in the recess (34).

2. The device according to claim 1,
**characterised in that**
the severing element (14) is connected to the housing (10) by a connecting web (26) which can be sheared off when the severing element (14) is acted upon by the ignition element (16).

3. The device according to claim 1 or 2,
**characterised in that**
the connecting web (26) is constituted interruption-free or comprises a plurality of web sections disposed distributed along the periphery of the severing element (14).

4. The device according to claim 2 or 3,
**characterised in that**
the connecting web (26) and the ignition element (16) form, at least temporarily and in particular until the complete severing of the current conductor (12), a guide for the severing element (14) when the severing element (14) is acted upon by the ignition element (16).

5. The device according to at least one of the preceding claims,
**characterised in that**
the pressure limiting means (64) can be activated when a predetermined pressure threshold value is reached in the recess (34) and/or when a predetermined displacement path of the severing element (14) relative to the housing (10) is reached.

6. The device according to at least one of the preceding claims,
**characterised in that**
the pressure limiting means is constituted by at least one area weakening a wall (36) of the severing element (14) bounding the recess (34) or an opening (64) perforating the wall.

7. The device according to at least one of the preceding claims,
**characterised in that**
a protection against twisting (66) is provided in order to prevent the severing element (14) from twisting relative to the housing (10) when acted upon by the ignition element (16), in particular after shearing-off of a connection web (26).

8. The device according to claim 7,
**characterised in that**
the protection against twisting is constituted by a film hinge (66) connecting the severing element (14) and the housing (10).

9. The device according to at least one of the preceding claims,
**characterised in that**
a counter-bearing (40), constituted in particular in one piece with the housing (10), is provided for the current conductor (12).

10. The device according to claim 9,
**characterised in that**
the counter-bearing (40) comprises a recess (42) for a section (44) of the current conductor (12), which section is bent round by the severing element (14) after the severing of the current conductor (12) and which tapers in a direction pointing away from the severing element (14).

11. The device according to at least one of the preceding claims,
**characterised in that**
the current conductor (12) comprises a predetermined bending point (48) and/or a predetermined severing point (46).

12. The device according to at least one of the preceding claims,
**characterised in that**
the current conductor (12) comprises a section (50) formed essentially U-shaped.

13. The device according to at least one of the preceding claims,
**characterised in that**
the current conductor (12) is secured in the housing (10) by latching means (58, 60).

14. The device according to at least one of the preceding claims,
**characterised in that**
the ignition element (16) and the housing (10) are connected to one another essentially gas-tight and pressure-resistant.

15. The device according to at least one of the preceding claims,
**characterised in that**
the ignition element (16), in particular a plastic casing (20) of the ignition element (16), and the housing (10) are connected to one another by a weld joint.

16. A method for the production of a pyromechanical severing device according to any one of the preceding claims, wherein
a housing (10) and a severing element (14) disposed in the housing (10) for severing a current conductor (12) are constituted in one piece with one another, e.g. by a plastic injection moulding process,
a pyrotechnic ignition element (16) for acting upon the severing element (14) is connected to the housing, e.g. by a welding process, and
the current conductor to be severed is disposed in the housing.

## Revendications

1. Dispositif de séparation pyromécanique comprenant un boîtier (10) et un élément de séparation (14) disposé dans le boîtier (10), lequel peut être déplacé par rapport au boîtier (10) par sollicitation par un élément d'allumage (16) pyrotechnique, afin de sectionner un conducteur (12), l'élément de séparation (14) étant conçu d'un seul tenant avec le boîtier (10) avant la sollicitation par l'élément d'allumage (16),
**caractérisé en ce que**
l'élément de séparation (14) présente sur son côté tourné vers l'élément d'allumage (16) un évidement (34) dans lequel l'élément d'allumage (16) dépasse au moins partiellement, et un moyen de limitation de pression (64) est prévu pour limiter une pression générée par l'élément d'allumage (16) dans l'évidement (34).

2. Dispositif selon la revendication 1,
**caractérisé en ce que**
l'élément de séparation (14) est relié au boîtier (10) par une nervure de liaison (26) pouvant être cisaillée en cas de sollicitation de l'élément de séparation (14) par l'élément d'allumage (16).

3. Dispositif selon la revendication 1 ou 2,
**caractérisé en ce que**
la nervure de liaison (26) est conçue sans interruption ou comprend plusieurs tronçons de nervure disposés et répartis sur le pourtour de l'élément de séparation (14).

4. Dispositif selon la revendication 2 ou 3,
**caractérisé en ce que**
la nervure de liaison (26) et l'élément d'allumage (16) forment un guidage pour l'élément de séparation (14) en cas de sollicitation de l'élément de séparation (14) par l'élément d'allumage (16) au moins de façon temporaire et en particulier jusqu'au sectionnement complet du conducteur (12).

5. Dispositif selon au moins l'une quelconque des revendications précédentes,
**caractérisé en ce que**
le moyen de limitation de pression (64) peut être activé lorsqu'on atteint une valeur seuil de pression prédéterminée dans l'évidement (34) et/ou lorsqu'on atteint une course de déplacement prédéfinie de l'élément de séparation (14) par rapport au boîtier (10).

6. Dispositif selon au moins l'une quelconque des revendications précédentes,
**caractérisé en ce que**
le moyen de limitation de pression est formé par au moins une ouverture (64) interrompant une surface affaiblissant la paroi (36) délimitant l'évidement (34) de l'élément de séparation (14) ou par la paroi.

7. Dispositif selon au moins l'une quelconque des revendications précédentes,
**caractérisé en ce que**
une sécurité de torsion (66) est prévue, afin d'empêcher l'élément de séparation (14) de tourner par rapport au boîtier (10) en cas de sollicitation par l'élément d'allumage (16), en particulier après cisaillement d'une nervure de liaison (26).

8. Dispositif selon la revendication 7,
**caractérisé en ce que**
la sécurité de torsion est formée par une charnière en film (66) reliant l'élément de séparation (14) et le boîtier (10).

9. Dispositif selon au moins l'une quelconque des revendications précédentes,
**caractérisé en ce que**
une butée (40), conçue en particulier d'un seul tenant avec le boîtier (10), est prévue pour le conducteur (12).

10. Dispositif selon la revendication 9,
**caractérisé en ce que**
la butée (40) présente un évidement (42) pour un tronçon (44), replié après le sectionnement du conducteur (12) par l'élément de séparation (14), du conducteur (12) qui se rétrécit dans une direction partant de l'élément de séparation (14).

11. Dispositif selon au moins l'une quelconque des revendications précédentes,
**caractérisé en ce que**,
le conducteur (12) présente un point destiné à la flexion (48) et/ou un point destiné à la rupture (46).

12. Dispositif selon au moins l'une quelconque des revendications précédentes,
**caractérisé en ce que**,
le conducteur (12) comprend un tronçon (50) conçu essentiellement en U.

13. Dispositif selon au moins l'une quelconque des revendications précédentes,
**caractérisé en ce que**,
le conducteur (12) est immobilisé par des moyens de blocage (58, 60) dans le boîtier (10).

14. Dispositif selon au moins l'une quelconque des revendications précédentes,
**caractérisé en ce que**,
l'élément d'allumage (16) et le boîtier (10) sont reliés l'un à l'autre de façon sensiblement étanche au gaz et résistante à la pression.

15. Dispositif selon au moins l'une quelconque des revendications précédentes,
**caractérisé en ce que**,
l'élément d'allumage (16), en particulier une enveloppe plastique (20) de l'élément d'allumage (16), et le boîtier (10) sont reliés l'un à l'autre par une liaison de soudure.

16. Procédé pour fabriquer un dispositif de séparation pyromécanique selon l'une quelconque des revendications précédentes, dans lequel
un boîtier (10) et un élément de séparation (14) disposé dans le boîtier (10) sont conçus l'un avec l'autre d'un seul tenant pour le sectionnement d'un conducteur (12), par exemple par un processus de moulage par injection de plastique,
un élément d'allumage (16) pyrotechnique est relié au boîtier pour la sollicitation de l'élément de séparation (14), par exemple par un processus de soudage, et
le conducteur à sectionner est disposé dans le boîtier.
